# EUROPEAN PATENT APPLICATION

(11) **EP 4 693 517 A1**
(43) Date of publication of application: **11.02.2026**
(21) Application number: 24935287.3
(22) Date of filing: 08.06.2024
(51) Int. Cl.: H01M 4/62, H01M 4/36, C08F 8/26

(54) **POLYTETRAFLUOROETHYLENE AND POLYACRYLONITRILE AS ACTIVE MATERIAL IN AN ELECTRODE**

(30) Priority: 16.04.2024 BR 102024007382
(71) Applicant: Bertolini Da Silva Oliveira, Samuel, 31270180 Belo Horizonte (BR); Fundacao Carlos Chagas Filho de Amparo a Pesquisa do Estado do Rio de Janeiro Faperj, 20941160 Rio de Janeiro (BR); Universidade Federal Fluminense, 24210340 Niteroi (BR)
(72) Inventor: XING, Yutao, 22290160 Rio de Janeiro (BR); DE SOUZA COUTINHO NOGUEIRA, Cauê, 20241320 Rio de Janeiro (BR); BERTOLINI DA SILVA OLIVEIRA, Samuel, 31270180 Belo Horizonte (BR)
(74) Representative: Haverkamp Patentanwälte PartG mbB
(86) International application number: PCT/BR2024/050242
(87) International publication number: WO 2025/217697

(57) **Abstract**

Polytetrafluoroethylene (PTFE) is a common binder in the positive electrode for alkaline metal (including alkaline earth metal) batteries; however, in this invention we claim the use of PTFE as an active material in alkaline batteries, thereby converting the fluorine in the polymer into lithium fluoride. PTFE becomes an active material by partially removing fluorine from the polymer chain, thereby facilitating lithiation thereof. Thermal treatment of PTFE may include mixing with polyacrylonitrile (PAN). We claim that, after heat treatment, the mixture of PTFE and PAN becomes a cathode active material.

## Description

### Technical field

The scope of the invention pertains to the application of alkaline metal batteries, in particular for lithium batteries, and corresponding cells and batteries. It also relates to a method of preparing a cathodic material for alkaline cells and energy storage.

### Context

Lithium-ion batteries are successful energy storage devices used in electronic vehicles and electrical products and in renewable sources. However, with increasing demand for greater specific capacity, conversion batteries are promising candidates to increase the amount of energy storage in the positive electrode (hereinafter called cathode). Examples of conversion cathodes are lithium-air batteries, lithium-sulfur batteries and lithium-fluorine batteries, such as carbon monofluoride (of the CFx type, where 0<X<4). While lithium-air and lithium-sulfur batteries rapidly decrease in specific capacity due to the presence of water or the transport of polysulfide in the electrolyte, carbon monofluoride has a low amount of fluorine and, consequently, a relatively low specific capacity.

PTFE has a high concentration of fluorine in its composition (-CF₂-), is thermodynamic and chemically stable, is an insulator and is commonly used as a binder in positive electrodes. During mixing of the cathode slurry, the binder is mixed with an electrically conductive material (e.g. super-P carbon) and with the active material, for example, in lithium-sulfur batteries, sulfur is the active material in a carbon host material. Therefore, the binder, the electrically conductive material and the active material are parts of the positive electrode. Because PTFE does not conduct electrons, the material cannot be reduced by lithium fluoride that produces lithium and therefore a chemical treatment is required to activate PTFE as cathode material for alkaline batteries.

### Embodiment of the invention

This invention is a cathode material used for alkali metal cells, for example lithium, sodium and magnesium batteries, and can be classified as metal-fluorine batteries, for example lithium-fluorine, sodium-fluorine and magnesium-fluorine.

An alkali metal cell can be defined as an electrochemical cell, which includes a battery cell or a rechargeable battery cell, which charges and electrochemically discharges alkali metals. Examples of alkali/alkaline cells are lithium, sodium and/or magnesium cells. An alkali metal-fluorine cell can be understood as an electrotechnical cell that electrochemically reacts with alkaline ions and with the fluorine participating in the reaction. For example, lithium, sodium or magnesium react with fluorine. The alkali metal-fluorine can be, for example, lithium-fluorine, sodium-fluorine and/or magnesium-fluorine.

Fluorine can be understood as a chemical compound that includes negatively charged fluorine, e.g. F⁻". The discharge of the cell may include at least one alkali metal and/or at least one metal ion. After discharge, at least one metal may be reduced to elemental or metallic form. In particular, the active material, in the charge state, includes at least one metal fluoride and, in the discharge state, includes at least one metal ion or at least one reduced metal that may contribute to the discharge, wherein at least one metal in the oxidized state can increase electrical conductivity due to the conductive or semiconductive properties. Particularly polyacrylonitrile and/or cyclized polyacrylonitrile, the polymer structure can chemically react with alkali ions, especially by means of nitrogen sites and therefore participate as a cathode active material.

At least one active material of the positive electrode (cathode) may contain fluorine and/or fluorinated polymer. For example, at least one active material encompasses or can be comprised of covalently bonded or ionic fluorine-bonded polymer. The cathode active material can include fluorinated polymers that react electrochemically with alkali metals, in particular, partially removed fluorine polytetrafluoroethylene of the structure of the polymer, PTFE, perfluoropolyether, and/or fluorinated polyacetylene.

At least one of the cathode active materials can include or be made up of an electronically conductive polymer mixed, optionally, with a fluorinated polymer. The electronically conductive polymer may incorporate cyclized polyacrylonitrile (cPAN), polypyrrole, polyparaphenylene, and/or polyacetylene, and the electronically conductive polymer may or may not be fluorinated or partially fluorinated, for example fluorinated polyacrylonitrile (FPAN), fluorinated polypyrrole, fluorinated polyparaphenylene, and/or fluorinated polyacetylene. The fluorinated polymer may be understood as a polymer with fluorine covalently or ionically bonded to the polymer. For example, the electrically conductive polymer may provide electrons to induce alkali metal reactions with fluorine in the polymer structure. For example, the cPAN in a PTFE matrix, in the discharge state, the alkali metal may be ionically bonded to the polymer and/or fluorine, while in the state of charge, the polymer and/or fluorine may be reduced.

In the context of the cathode active material, the active material during battery discharge will capture electrons from the circuit and react with alkali metals, e.g. lithium-cobalt oxide, lithium-nickel oxide, sulfurized polyacrylonitrile, and/or sulfur.

In the context of the fluorinated polymer embodiment and the electrically conductive polymer, the fluorinated polymer may be wholly and/or partially composed of electrically conductive polymer. Particularly PAN, heat treatment at temperatures above 300 °C, especially in the range of 300 °C to 650° C, it forms a conjugated polymer system in which a pair of nitrogen in the carbon forms an aromatic structure and, consequently, an electronically conductive polymer. In addition, the thermal treatment of PAN releases gases containing hydrogen gas, ammonia, hydrocyanate, or other gases.

The defluorination of the polymer may be understood as the chemical reaction of a fluorinated polymer that reduces the amount of fluorine, e.g. PTFE may have the fluorine partially or totally removed by gaseous reaction. Particularly in PTFE, the de-fluorination is achieved with heat treatment at temperatures above 200° C, especially in the range of 200°C to 650°C by gases, e.g. hydrogen, ammonia and/or hydrocyanate gas. The defluorination of PTFE tends to form a sigma-pi conjugated structure in the polymer, which tends to form a fluorinated-like polymer structure.

Alternatively, or in addition, the defluorination of a polymer may be encompassed by the PAN. For example, PAN incorporated with at least one fluorinated polymer, e.g. PTFE, perfluoropolyether, and/or fluorinated polyacetylene, may induce defluorination by heat treatment at temperatures above 200° C. especially in the range of 200°C to 800°C In this context, particularly the PAN embodiment and at least PTFE (Teflon), hereinafter called PANflon, is heat treatment above 200° C. especially in the range of 200° to 800°C In this context, the heat treatment may take less than 24 hours, especially less than 6 hours. Optionally, the thermal treatment procedure may be made in inert gas, such as argon and/or nitrogen. Mechanical processes that induce heat, e.g. a ball mill, can also be considered as heat treatment.

PANflon can be understood as PTFE incorporated or not with at least PAN and treated terminally with gases and/or with at least PAN, as mentioned above. Pure PTFE with part of the fluorine removed from PTFE can also be understood as PANflon. In this context, PANflon is the PAN blend in PTFE in a proportion of 0% to 100%.

In this context, the cathode active material can be incorporated with at least PANflon. Alternatively, or in addition, the cathode material comprises at least the cathode active material and/or an electrically conductive material, e.g. carbon structures, such as carbon super P and/or carbon nanotube. Therefore, the cathode active material can alternatively be surrounded by an electrically conductive material.

Within the scope of the embodiment of the active material, in the first step of the method, PTFE is de-fluorinated. This method is carried out by chemical reaction with at least one gas, e.g. hydrogen and/or other gases, e.g. ammonia. In this scope, PTFE can be de-fluorinated by means of a chemical reaction with at least one other material, for example polyacrylonitrile. In this context, PAN releases gas containing hydrogen and ammonia during heat treatment, while PAN behaves as semiconductor material electrically and/or potentially as cathode active material together with PTFE.

The polymer precursor may include an inherently electrically conductive polymer, such as polyaniline (PAni). In addition, the polymer precursor, such as polyacrylonitrile (PAN), may be adapted to form an inherently electrically conductive polymer, specifically cyclized and dehydrogenated polyacrylonitrile (cPAN) or polyaniline (PAni). The polymer precursor may be reacted in a corresponding polymer after heat treatment, e.g. cPAN. The polymers in the cathode material can include or be a homopolymer and/or a copolymer.

The invention also relates to a cathodic material, especially at least the cathode active material, and can optionally include additives, conductive material and/or binder. In this context, another material may be incorporated into the cathode active material, in particular an electrolyte, e.g. a polymer electrolyte to conduct the alkaline/alkaline ions and/or a solid state electrolyte.

Within the scope of a specific embodiment, the method further includes mixing at least one electrically conductive material, especially selected from the group consisting of graphite, carbon fibers, and carbon nanotubes. In another specific embodiment, the method further includes mixing at least one binding agent, e.g. polyvinylidene fluoride and/or PTFE. In this context, PTFE was not necessarily treated or activated as cathode active material. The bonding agent may be mixed with the composite material and/or with the electrically conductive material. The mixing order of the composite cathodic material can be processed in different order, e.g. the cathode active material, the electrically conductive material, and/or the bonding agent can optionally be mixed into different orders.

Within the scope of another specific embodiment, in the method, the cathode active materials, e.g. PANflon, can optionally be mixed with other cathode active materials, e.g. sulfur and/or lithium-cobalt oxide.

Within the scope of another specific embodiment, in the method, the cathode active materials can be mixed from 0.1% to 95% by weight with electrically conductive additives. Also, in the method, another specific embodiment from 0.1% to 99% by weight with binding agents is mixed. Added thereto, in the method, another specific embodiment from 0.1% to 99.5% by weight with at least one other cathode active material, e.g. sulfur, sulfurized polyacrylonitrile and/or lithium cobalt oxide.

The cathodic material, especially for preparing the cathode material slurry, at least one solvent, e.g. N-Methyl-2-pyrrolidone, can be spread in a collector, e.g. by a doctor blade, to convey the material in a collector, such as an aluminum foil. Preferably, the solvent is removed after treatment, especially by the drying method. Alternatively, the cathode material, especially for drying methods, may be compressed to produce a solid material for cathodic cells.

Thereafter, the cathode material system can be subjected to additional stamping or cutting to produce various cathodes. The cathodic material units can be installed into the alkali/alkaline metal anode in the form of plates or sheets.

The present invention relates to cathodic materials for alkaline batteries, particularly lithium, sodium and/or magnesium anodes, e.g. sheet or sheet metal plate. Within the scope of another specific embodiment, the alkaline battery particularly includes at least one electrolytic solution agent and at least one conductive salt, and/or at least one solid electrolyte.

The electrolytic solution agent may belong to the group formed by ethers, carbonates, lactones and ionic liquids. The electrolytic solution can include 1,3-dioxolane (DOL), ethylene carbonate (EC), diethylene carbonate (DEC), dimethoxyethane (DME), dimethyl carbonate (DMC), propylene (PC), and/or a combination thereof. The conductive salt may be composed of alkali salts, for example lithium salts, including bis (trifluoromethylsulfonyl) imide, hexafluorophosphate, tetrafluoroborate, trifluoromethanesulfonate, chlorate, oxalate borate, nitrate, hexafluoroarsenate, and combinations thereof. The solid state electrolyte can be composed, for example, of at least Li₇La₃Zr₂O₁₂, Li_{6.4}La₃Zr_{1.4}Ta_{0.6}O₁₂, Li_{1.4}Al_{0.4}Ti_{1.6}(PO4)₃, Li_{1.5}Al_{0.5}Ge_{1.5}(PO4)₃, and/or poly (ethylene oxide) based electrolytes.

Another subject matter related to the present invention is its application as an energy storage device, which may be a mobile or stationary energy storage device, which includes alkaline/alkaline batteries. In this context, energy storage can, for example, be an energy storage for a cell phone, electric vehicle, laptop, electric tools, laptops, or power supplies.

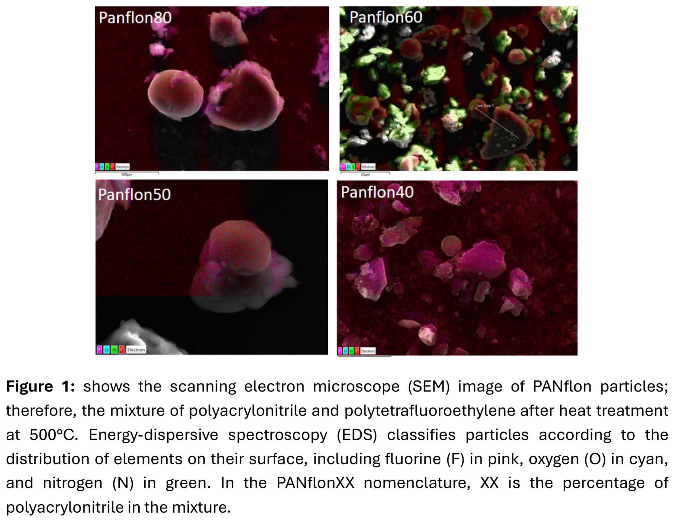

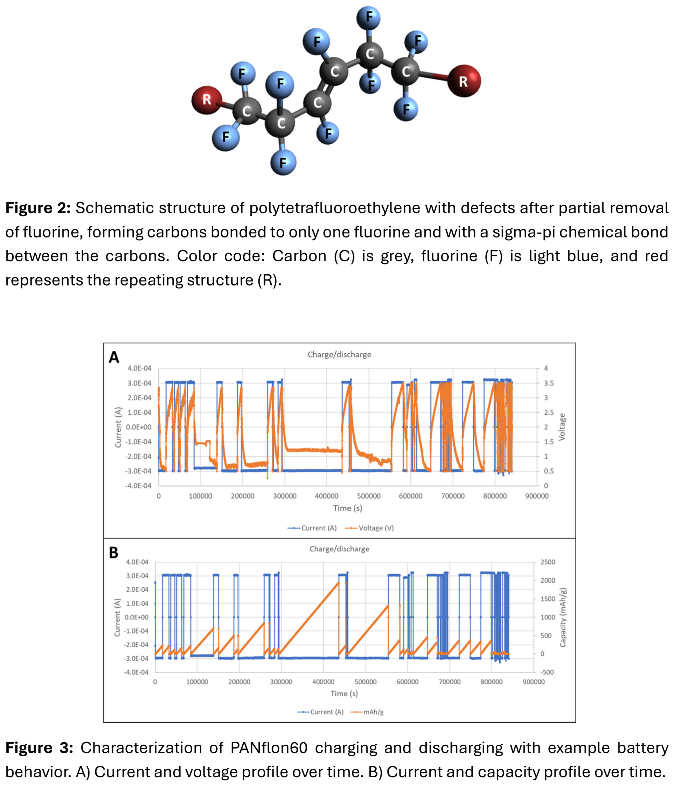

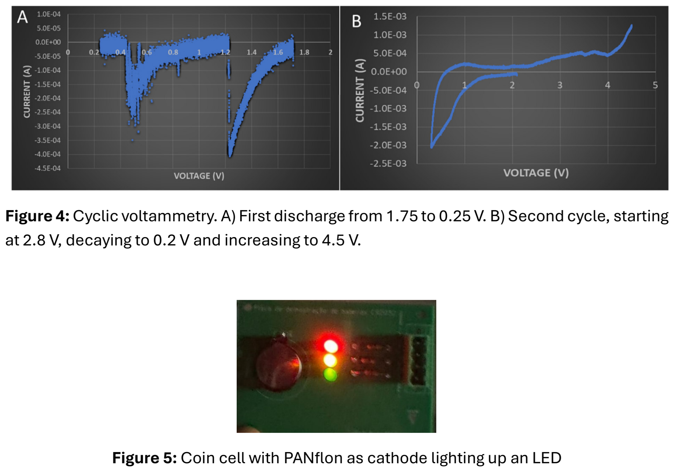

In this context of the present invention, FIG. 1 shows the characterization of PANflon after heat treatment. FIG. 2 shows a schematic representation of the defective structure of PTFE, wherein two carbons have a fluorine atom less in the polymer structure. FIG. 3 is the charging and discharging of the battery. FIG. 4 is the cyclic voltammetry of PANflon. FIG. 5 is a demonstration of the PANflon cathode connecting 3 LEDs.

## Claims

1. A cathode material for an alkali metal battery, characterized for containing at least one cathode active material containing defective or chemically modified polytetrafluoroethylene, with partially removed fluorine.

2. A cathode material for an alkali/alkaline metal battery, characterized for containing at least one cathode active material containing PANflon, therefore a mixture of polytetrafluoroethylene and polyacrylonitrile.

3. The cathode material of claim 1 characterized for containing the at least one cathodic active material is surrounded by at least one further material, including more cathodic active materials and/or conductive materials and/or binder material.

4. The cathode material of claim 2 characterized for containing the at least one cathodic active material is surrounded by at least more than one material, including cathodic active materials and/or electrically conductive materials and/or binder materials.

5. A method for preparing a cathodic material for an alkaline cell, characterized for containing at least the mixture of polytetrafluoroethylene and polyacrylonitrile, or pure polytetrafluoroethylene.

6. The method described in claim 5, characterized for containing the PANflon is prepared and reacted at a temperature above 200° C.

7. The method of claim 5, characterized for containing the PANflon is defluorinated with gases such as hydrogen and/or ammonia.

8. The method of claim 5, 6 or 7, characterized for containing the at least one PANflon is mixed with an electrically conductive additive including at least one of the following elements: graphite, carbon fiber, carbon super-P, carbon nanotubes and/or other electrically conductive additive.

9. The method of claim 5, 6 or 7, characterized for containing the at least one PANflon is mixed with a binding agent that includes at least one polyvinylidene fluoride, polytetrafluoroethylene and/or other binding agent.

10. An alkaline battery, comprising a negative electrode (anode) containing alkali metal and a positive electrode (cathode), characterized for containing the cathode includes at least PANflon, and includes an electrolyte composed of at least one electrolyte solution agent and/or solid state electrolyte and/or with a conductive salt.

11. A method of mixing polyacrylonitrile and polytetrafluoroethylene, characterized for containing solvent or mechanical methods, thereby preparing the PANflon for heat treatment as described in claim 6.

12. A method of mixing polyacrylonitrile and polytetrafluoroethylene, characterized for containing mechanical methods, for example, a grinding machine, thereby preparing the PANflon for heat treatment as described in claim 6.

13. The battery recited in claim 10, characterized for containing PANflon, and can be used for energy storage.
